(19) Europäisches Patentamt
European Patent Office
Office européen des brevets

(11) EP 3 539 383 A1

(12) EUROPEAN PATENT APPLICATION
published in accordance with Art. 153(4) EPC

(43) Date of publication:
**18.09.2019 Bulletin 2019/38**

(21) Application number: **17867232.5**

(22) Date of filing: **31.10.2017**

(51) Int Cl.:
***A01N 31/16*** *(2006.01)*

(86) International application number:
**PCT/ES2017/070724**

(87) International publication number:
**WO 2018/083361 (11.05.2018 Gazette 2018/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.11.2016 ES 201631404**

(71) Applicants:
- **Consejo Superior de Investigaciones Científicas (CSIC)**
  **28006 Madrid (ES)**
- **Tecnofood ID Soluciones, S.L.**
  **18360 Huétor Tájar (Granada) (ES)**

(72) Inventors:
- **RODRÍGUEZ GUTIÉRREZ, Guillermo**
  **41013 Sevilla (ES)**
- **FERNÁNDEZ-BOLAÑOS GUZMÁN, Juan**
  **41013 Sevilla (ES)**
- **GARCÍA BORREGO, Aránzazu**
  **41013 Sevilla (ES)**
- **ESPEJO CALVO, Juan Antonio**
  **18360 Huétor Tájar (Granada) (ES)**
- **ROJANO DELGADO, Antonia M.**
  **18360 Huétor Tájar (Granada) (ES)**
- **FERNÁNDEZ PRIOR, María África**
  **18360 Huétor Tájar (Granada) (ES)**

(74) Representative: **Pons**
**Glorieta Ruben Dario 4**
**28010 Madrid (ES)**

# (54) USE OF 3,4-DIHYDROXYPHENYLGLYCOL (DHPG) AS A PLANT GROWTH REGULATOR

(57) The present invention relates to the use of the compound 3,4-dihydroxyphenylglycol (DHPG), compositions containing same, and methods for using said compositions as effective plant growth regulators for the treatment of crops and weeds.

EP 3 539 383 A1

## Description

The present invention can be included within the field of biochemistry or plant physiology and agriculture. It relates to the use of the compound 3,4-dihydroxyphenylglycol (DHPG), compositions comprising same and methods for using said compositions as effective plant growth regulators for enhancing crop growth, as well as for controlling weed growth.

## STATE OF THE ART

Plants synthesize endogenous growth regulators which participate in an essential manner in their physiology so many of the current agricultural practices include the use of compounds, which are synthetic for the most part, with properties similar to these regulators for modifying the metabolism and thus increasing the crop yield, and/or fruit quality, as well as eliminating weeds. For this reason, manufacturers of agrochemicals are constantly searching for new ways to obtain new or better compounds and methods for regulating plant metabolism and accordingly increase crop yields.

Many growth regulators include compounds such as carboxylic acids, sugar analogues and amines which have the capacity of inducing various effects in plants (Alexieva, 1994, Compt. Rend. Acad. Bulg. Sci. 47, 779-82). It has been demonstrated in corn crops that treatments with polyhydroxycarboxylic acids increase root growth (Gur et al., 1987, Physiologia Plantarum. 69, 633-638) and the formation of root hairs, which favors better nutrient absorption.

In relation to the plant growth regulating potential of amines, the latter are known to affect essential processes of the plants such as flowering, germination, growth, and senescence of leaves, among others. (Shih et al., 1982, I. Plant. Physiol. 70, 1592-1596). Interestingly, studies have established that certain amines with a plant growth regulating effect may also affect the development and physiology of phytopathogenic fungi (Havis et al., 1997, J. Agrie. Food. Chem. 45, 2341-2344). In the same manner, it has been reported that sugar analogues may interfere with the growth of fungi, reducing the damage that they may cause (El Gaouth et al., 1995, Plant. Dis. 79, 254-278).

Another type of the molecules with plant growth regulating capacity are nitrated derivatives of phenolic acids, particularly o-nitrophenolate, p-nitrophenolate and the 5-nitroguaiacolate (Górnik and Grzesik, 2005, Folia Horticulturae. 17, 119-127). Although these compounds also have the capacity to affect the development of plant pathogenic fungi, their use has been restricted to that of plant growth regulators to limit their dose due to potential risks. (Official Journal of the European Union, 19.2.2009, 48/5-48/12).

However, the proliferation and indiscriminate use of synthetic plant growth regulators have made it necessary for the regulation on agriculture to restrict the use of chemical compounds which cause hormonal dysfunctions and changes in crops or are toxic. Likewise, the intensive use of chemical pesticides for pest and disease control, have led to the causal organisms to develop resistance, making it necessary to use increasingly larger doses or to develop more toxic products. These aspects increase the level of risk to the health of ecosystems, the health of farmers and end consumers.

Thus, in the search for new compounds with plant growth regulating activity, research has been directed at obtaining biomolecules/extracts of interest from by-products of the agroindustry, for the purpose of increasing the value of said by-products and minimizing the environmental impact and allowing the development of a new biotechnological industry close to and/or dependent on the agroindustry providing the source of the by-products. Furthermore, biotechnological techniques have been applied through the *screening* of bioactivities *in vitro* in a laboratory and *in vivo* through field testing of said extracted biomolecules for the later design of natural plant growth regulators (antimicrobial, antifungal, insecticidal, acaricidal and anti-germination regulators for weed control), intended for use fundamentally in the sectors of ecological agriculture and integrated production, which is currently in higher demand, but also in conventional agriculture for the purpose of reducing the application of plant protection products from chemical synthesis.

Therefore, the development of biomolecules and/or extracts comprising same as new non-toxic or low-toxicity plant growth regulators aimed at increasing crop production, is important.

## DESCRIPTION OF THE INVENTION

To solve the aforementioned limitations, a general object of the invention is to provide the use of a compound, preferably obtained as a by-product from industry, more preferably the olive oil industry and/or the table olive industry, a composition comprising same, and a method for using the composition as an effective plant growth regulator.

The inventors have demonstrated on one hand that 3,4 dihydroxyphenylglycol (DHPG) is an effective plant growth regulator, both for the control of germination and growth of agricultural crops, and as a potent herbicide against weeds. Furthermore, on the other hand, the inventors have demonstrated that this phenol is an important component in the phenolic fraction of olive by-products, in both the olive oil industry and the table olive industry, and it can thus favor the utilization and recycling of said by-products. In this sense, the present invention demonstrates that DHPG is a compound referred to as an allelochemical because it provides benefits, especially competitive benefits, in plants,

mainly directed at an increase in germination, growth, or development, and on the other hand, it is also capable of inducing negative effects on other plants, preferably weeds, inhibiting their germination and preventing the growth thereof. These substances with said duality are referred to, as mentioned above, as allelochemicals. Said definition covers both the harmful and beneficial effects. It should be pointed out that many substances with allelopathic activity have beneficial effects at very low concentrations, and once a given threshold is surpassed, act negatively.

Therefore, the use of DHPG or an extract rich in said compound, i.e., comprising a minimum concentration of at least 1 ppm of DHPG or alternatively, 0.001-50 g/L of DHPG, obtained from by-products derived from olive oil extraction (vegetable water, decantation waters, vertical centrifuge waters, washing waters, pulp, pomace, pulp water, etc.) and/or the table olive industry (curing water, washing waters, brines, preserving liquids, etc.) as a plant growth regulator has the following advantages:

- Since it is a natural product and can be obtained in a physical manner, it is not toxic, does not contaminate, and does not generate resistances in crops, and even less so at the active concentrations.
- It is highly effective as a herbicide when it is used in a range of concentrations of 100 ppm to 50000 ppm of DHPG (mg DHPG in 1 kg of product).
- It is highly effective as a biostimulant of the germination and growth of crops when it is used in a range of concentrations of 1 to 1500 ppm of DHPG.
- Use of by-products of the oil mill and/or table olive industry to achieve a higher added value for same.

Thus, a first aspect of the present invention relates to the use of 3,4 dihydroxyphenylglycol (DHPG) as a plant growth regulator.

For purposes of the present invention, the term plant growth regulator refers to any compound capable of inducing plant growth, preferably agricultural crop growth. For purposes of the present invention, said term also refers to those compounds which are capable of inhibiting weed growth, therefore having herbicidal activity.

3,4 DHPG is a compound that belongs to the phenol group and is part of the family of phenylpropanoid glycosides. The CAS number of DHPG is: 28822-73-3; and its formula is:

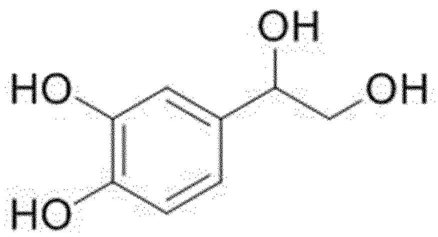

In a particular embodiment, the DHPG compound described in the present invention as a plant growth regulator can be obtained from by-products derived from olive oil extraction and/or the table olive industry. In another more particular embodiment, the extract rich in DHPG obtained from the by-products comprises at least one composition/concentration of DHPG of at least 1 ppm (mg/kg).

For purposes of the present invention, the term "extract rich in DHPG" refers to by-products obtained from the olive oil extraction industry and/or the table olive industry, mixture of said by-products or fractions obtained from the by-products or from mixtures thereof, comprising at least 1 ppm of DHPG, preferably from 1 to 50000 ppm, or alternatively from 0.001-50 g/L of DHPG.

In another more preferred embodiment, the plant growth regulating activity of the use of DHPG is selected from herbicidal activity against weeds or biostimulating/growth-enhancing activity for agricultural crops.

For purposes of the present invention, the term herbicide refers to any chemical compound capable of controlling or eliminating unwanted plant species.

In another more preferred embodiment, the DHPG compound shows herbicidal activity when it is used at a concentration which ranges from 100 to 50000 ppm, more preferably from 500 to 9000 ppm.

For purposes of the present invention, the term crop growth enhancer or biostimulant refers to any compound capable of inducing plant growth and increasing crop yield in general.

In another more preferred embodiment, the DHPG compound shows growth-enhancing activity for agricultural crops when it is used at a concentration which ranges from 1 to 1500 ppm, more preferably from 1 to 500 ppm.

In another preferred embodiment, DHPG is used in combination with at least one adjuvant.

For purposes of the present invention, the term adjuvant refers to chemical substances that help to improve the characteristics and properties of a compound or chemical substance, such that the final composition is not toxic or contaminating. They can be any adjuvant authorized for use in plant growth regulating formulations, but are preferably

selected from oil-based adjuvants and mixtures, organosilicone-based adjuvants and mixtures, non-ionic-based adjuvants and mixtures, polymer-based adjuvants and mixtures, and fatty acid-based adjuvants and mixtures, and combinations thereof. The adjuvant will be any of those known to the skill person in the art and used in the technical field of the invention.

In a more preferred embodiment, the adjuvants are selected from any of the following: araoil, biopower, and/or any combination thereof. In another more preferred embodiment, the adjuvants are used at the concentrations determined by the manufacturers thereof.

Another object disclosed in the present invention relates to an extract obtained from by-products derived from olive oil extraction and/or the table olive industry, characterized in that said extract comprises a concentration of DHPG of at least 1 ppm, preferably which ranges from 1 to 50000 ppm or alternatively from 0.001 to 50 g/L.

Another object disclosed in the present invention relates to a plant growth regulating composition comprising DHPG, preferably at the concentrations indicated above, and/or an extract as disclosed above.

In another preferred embodiment, the plant growth regulating composition comprises furthermore at least one adjuvant. In another more preferred embodiment, the adjuvant, as indicated above is selected from any of the list consisting of: oil-based adjuvants and mixtures, organosilicone-based adjuvants and mixtures, non-ionic-based adjuvants and mixtures, polymer-based adjuvants and mixtures, and fatty acid-based adjuvants and mixtures, and combinations thereof. In another more preferred embodiment, the adjuvant is selected from any of the following: araoil and/or biopower.

In another preferred embodiment, the plant growth regulating composition of the invention has herbicidal activity when the DHPG is at a concentration which ranges from 100 to 50000 ppm, preferably from 500 to 9000 ppm. In another preferred embodiment, the plant growth regulating composition of the invention has biostimulant activity of the growth when the DHPG is at a concentration which ranges from 1 to 1500 ppm, preferably from 1 to 500 ppm.

Another object disclosed in the present invention relates to a method for weed control which comprises administering to a crop an effective dose of DHPG, or the extract, or the plant growth regulating composition, as previously described.

For purposes of the present invention, the term "effective dose" refers to a non-toxic amount of the DHPG compound, as described in the present document, that is sufficient to provide the desired effect in crops, for example, inhibiting weed growth or enhancing crop growth. The precise and effective amount for each type of activity will depend on the type of crop, the area to be treated, as well as the type of administration used. Therefore, it is useless to specify an effective exact amount in advance. However, the effective amount for a given situation can be determined by routine experiment and is within the criterion of the skill person in the art.

For purposes of the present invention, when herbicidal activity is to be obtained, an effective dose will range from 100 to 50000 ppm, preferably from 500 to 9000 ppm of DHPG, and when growth-enhancing activity is to be obtained, an effective dose will range from 1 to 1500 ppm, preferably from1 to 500 ppm of DHPG.

In a preferred embodiment, the weeds are selected from monocotyledons and dicotyledons. In another more preferred embodiment, the monocotyledon weeds are preferably: *Lolium rigidum; Lolium multiflorum,* and the dicotyledon weeds are preferably: *Sinapis arvensis, Chenopodium album and Stellaria media.*

Another object described in the present invention relates to a method for inducing crop growth which comprises administering to a crop an effective dose of DHPG, or the extract, or the plant growth regulating composition, as previously described.

In a preferred embodiment, the crops are selected from monocotyledons and dicotyledons. In another even more preferred embodiment, the monocotyledons are preferably Gramineae, more preferably *Triticum aestivum* (common wheat), Liliaceae, more preferably *Allium cepa* (Onion Galaxia var.). In another more preferred embodiment, the dicotyledons are preferably Cruciferae, more preferably *Lepidium sativum L.* (garden cress); Compositae, more preferably *Lactuca sativa L.* (Lettuce Cervantes var.); Solanaceae, more preferably *Lycopersicum esculentum L.* (Tomato Tres cantos var.), *Solanum tuberosum L.* (Potato Red Pontiac var.), *Solanum melongena L.* (Aubergine Round Smooth var.) and *Capsicum L.* (Pepper Italian var.); Cucurbitaceae, more preferably *Cucumis sativus L.* (Cucumber Bellpuig var.), *Cucurbita pepo L.* (Courgette Diamante var.) and *Citrullus lanatus L.* (Watermelon Meridian var.); and Asparagaceae, more preferably, *Asparagus officinalis L.* (Asparagus Atlas var.).

In a preferred embodiment of any of the methods disclosed in the present invention, the administration of the DHPG compound, the extract, and/or the plant protection composition is administered via spraying, atomization, dispersal, coating, or effusion, depending on the expected results. In another more preferred embodiment, once the compound has been administered, the compound may carry out rapid or slow release, preferably slow release.

Throughout the description and the claims, the word "comprises" and its variants are not intended to exclude other technical features, additives, components or steps. For those skilled in the art, other objects, advantages and features of the invention may be inferred from both the description and the embodiments of the invention. The following examples are provided by way of illustration, and are not intended to limit the present invention.

## EXAMPLES

The invention is illustrated below by means of tests conducted by the inventors that demonstrate the effectiveness of the product of the invention.

### Example 1. Obtaining the DHPG compound and/or an extract rich in same.

Using a by-product such as pulp collected in the olive oil industry, there is generated, after storage thereof, what is referred to as pulp water, which were used in the preparation of extracts and/or concentrates for their chemical and plant growth regulating characterization. These pulp water samples were obtained from cooperatives located in Palenciana (Cordoba) and Marchena (Seville). Their phenolic content was analyzed and it was determined that there was a good proportion of HT and DHPG, so it can be considered a source to be taken into account for the extraction of polyphenols.

The method for extraction of polyphenols on an industrial level is carried out following the method described in patent EP1369407B1. Said extraction has been carried out exclusively by means of physical methods, without using organic solvents, therefore, both the extract and the polyphenol described in the present invention, DHPG, are suitable for use in ecological crops. A brief description of the technology used for obtaining the phenolic extracts of the present invention is described below.

A starting volume of 100 L of fresh vegetable water collected during the 2013/2014 campaign was used, with a relatively high content of the polyphenols of interest, with a concentration of HT of 2.45 g/L and DHPG of 0.27 g/L, among others, quantified by high-performance liquid chromatography (HPLC-UV). The extraction equipment is made up of three chromatography columns and a water treatment equipment which are used to extract and purify three different types of extracts: an extract rich in DHPG, another extract rich in HT, and a third extract which is a mixture of the previous two (HT+DHPG). A work cycle was established, comprising several steps described below in detail:

1. The first column (C.C1) is loaded with a fixed volume of the phenol source, allowing it fall by gravity onto the resin.
2. After loading, said column is washed with water prior to elution.
3. The column can be emptied in two steps, and a different extract is obtained in each one.

    3.1. In a first phase, a mixture of HT and DHPG is obtained at a ratio of 10: 1 of both respectively.
    3.2. In a second phase, an extract rich in HT is collected.

4. For the purification and separation of the extract rich in DHPG, certain fractions previously obtained were passed through a second chromatography column (C.C2). And, after a series of elutions with water, fractions which could be concentrated, even to dryness, using concentration or evaporation equipment with or without a vacuum were obtained. Final extracts are thereby obtained with high biological activity.

The fractions obtained from chromatography column C.C2 were purified with the aid of a third chromatography column (C.C3). Different fractions were obtained from this step, and of those fractions the one richest in DHPG was chosen, depending on its chromatographic profile, selecting those fractions in which the DHPG signal was the main signal (concentrations between 0.001 and 50 g/L), to achieve the final extracts of this compound used in the examples described below. Said extracts will be prepared at different pHs and different concentrations to analyze their effectiveness as plant growth regulators.

After the obtention of the three aforementioned extracts:

(1) extract rich in HT (10-50000 ppm) with several degrees of purity, 50 and 99.8% relating to dry weight;
(2) extract rich in DHPG (1-50000 ppm) with several degrees of purity, 50 and 99.6 % relating to dry weight; and
(3) extract mixture comprising HT + DHPG (at the aforementioned concentrations), the activity thereof was analyzed. To that end, tests were carried out in a controlled growth chamber and in the field using monocotyledon and dicotyledon species for controlling the effect of said compounds on different stages of development, specifically in the pre-emergence or germination stages; early post-emergence or plantlet development stage; and late post-emergence or plant development stage until the production stage; of the analyzed plants.

### Example 2. Analysis of the plant growth regulating activity of the DHPG compound in pre-emergence tests, both in weeds and in agricultural crops.

Petri dishes 9 cm in diameter comprising filter paper discs received a volume of 4 to 8 mL (according to the plant species tested) of a solution comprising different doses of the phenolic compound of interest isolated with a high

degree of purity, greater than 99 %, HT, DHPG and HT+DHPG, which ranged from 0 to 400 ppm (0, 50, 100, 150, 200, 250, 300, 350 and 400 ppm), and on which 15 seeds of each of the crops and plants tested were finally incorporated. Three repetitions were performed for each test and for each concentration which each comprised the 15 seeds to prevent plate bonding and thus enable also studying the radicle. Petri dishes in which only distilled water was added were used as negative control; and a reference herbicide, Flazasulfuron (FZS), which acts against both monocotyledon and dicotyledon plant crops, was used as a positive control at the same doses used for each of the phenolic compounds (0, 50, 100, 150, 200, 250, 300, 350 and 400 ppm).

The seeded plates were incubated in a controlled growth chamber (Fitotron; Weiss Technik; United Kingdom) under the following conditions: day/night temperature of 27/18 °C; 14h photoperiod; and 580 $\mu$mol $m^{-2}$ $s^{-1}$ of light; for a period of 5 to 10 days, according to the species. After said time has lapsed, the seeds that have successfully germinated are counted and the roots are measured to thus calculate the germination index using the following formula:

$$IG = [(\%\ GMxLM)/(\%\ GCxLC)]\ x\ 100;$$

wherein: IG = germination index; % GM = percentage of germinated seeds of the sample (extract); % GC = percentage of germinated seeds of the negative control (distilled water); LM = mean length of the roots of the seeds of the sample and LC = mean length of the roots of the seeds of the negative control.

Additionally, the following variables were also analyzed: number of germinated seeds, length of plumule (where necessary), roots (length and number), dry weight and wet weight.

The species of weeds used in these tests are indicated in Table 1, and the species of agricultural crops tested are indicated in Table 2.

**Table 1.** Species of weeds tested.

| **Monocotyledons** | **Dicotyledons** |
|---|---|
| *Lolium rigidum* (resistance to inh-EPSPS -R to glyophosate-) | *Sinapis arvensis* |
| *Lolium rigidum*<br>(multiple resistance to inh-ACCase and ALS-R to ACCase and ALS-) | *Chenopodium album* |
| *Lolium multiflorum* | *Stellaria media* |

**Table 2.** Species of agricultural crops tested.

| **Monocotyledons** | **Dicotyledons** |
|---|---|
| *Gramineae:*<br>▪ *Triticum aestivum* (Common wheat) | *Cruciferae:*<br>▪ *Lepidium sativum L. (garden cress)* |
| *Liliaceae:*<br>▪ *Allium cepa* (Onion *Galaxia* var.) | *Compositae:*<br>▪ *Lactuca sativa L. (Lettuce Cervantes var.)* |
| | *Solanaceae*:<br>▪ *Lycopersicum esculentum L. (Tomato Tres cantos var.),*<br>▪ *Solanum tuberosum L. (Potato Red Pontiac var.),*<br>▪ *Solanum melongena L. (Aubergine Round Smooth var.)*<br>▪ *Capsicum L. (Pepper Italian var.)* |
| | *Cucurbitaceae:*<br>▪ *Cucumis sativus* L. (Cucumber Bellpuig var.)<br>▪ *Cucurbita pepo* L. (Courgette Diamante var.)<br>▪ *Citrullus lanatus* L. (Watermelon Meridian var.) |
| | *Asparagaceae:*<br>▪ *Asparagus officinalis* L. (Asparagus Atlas var.) |

With the values obtained for each of the analyzed variables, germination percentage curves have been constructed according to the concentrations used of the HT compounds, DHPG compounds, and mixture thereof. The results

obtained offer an idea about the difference in concentrations supported by each of the species tested and about the dose which inhibits their germination in soil.

The data shown below includes the values necessary for reaching the maximum dose 90 (LD90) in reference to the degree of toxicity of a substance indicating that 90% of the population treated with said substance dies, as well as the doses of each extract that induced plant growth.

**Table 3.** LD90 and dose acting as weed growth activator for weeds grown in the presence of the different extracts expressed in ppm of active ingredient. Values > means that the LD90 has not been reached. Where there are two doses, it means that results for both doses have been obtained.

| | LD90 | | | Growth activating dose | | |
|---|---|---|---|---|---|---|
| **Species of weeds** | **HT** | **DHPG** | **HT+DHPG** | **HT** | **DHPG** | **HT+DHPG** |
| *L. rigidum (inh*-EPSPS) | 350 | 100, >1000 | 250 | | 50 | |
| *L. rigidum (*inh-ACCase and ALS) | 1720 | 50-100 3420 | 710 | | | |
| *S. arvensis* | 350 | 100 | 300 | | | |
| *C. album* | 1800 | 125 >4000 | 710 | | | |

In the particular case of the weed from the species *Lolium rigidum* (resistant to glyphosate), DHPG is observed to be more effective as an antigerminative agent or herbicide compared to HT and to the mixture thereof. The dose of 100 ppm of DHPG produces a reduction in germination of up to 90% compared to the necessary doses of the other compounds tested, 350 ppm for the case of HT and 250 ppm for the case of the mixture of HT+DHPG. The fact that there is a maximum effectiveness peak at the dose of 100 ppm of DHPG, and that said effectiveness disappears at higher doses, then appearing again at very high doses (>1000 ppm), suggests a mechanism of degradation in active radicals which cause those peaks. Furthermore, the increase in germination and leaf mass of said crop at slightly higher doses of 100 ppm of DHPG suggests that said compound is of a hormonal nature, as occurs with auxinic herbicides. The herbicidal action of HT appears only at relative high doses of the compound. The HT+DHPG mixture presents an increase in leaf mass at 50 ppm, which means that there is a hormonal growth character.

In the tests carried out for the species *Lolium rigidum* (R to ACCase and ALS), it was demonstrated that a dose of DHPG of 3420 ppm was capable of reducing germination of said species by 90%, whereas LD90 for HT and for the mixture of HT+DHPG was 1720 ppm and 710 ppm, respectively. All the doses of the compounds at which the LD90 was reached are very high and are not useful for control of the growth of said weed. However, it was observed that at the dose of 1320 ppm of DHPG, there was a weight reduction of 90%. Another curious aspect is that the inhibitory effect on growth is repeated again at low doses of 50-100 ppm of DHPG. These results clearly show that although DHPG controls growth of the plant *Lolium rigidum* (resistant to ACCase and ALS), said control is not as effective as that carried out in the case of the plant *Lolium rigidum* (resistant to glyphosate).

In the case of the species *Sinapis arvensis,* it experienced germination problems so the topographical tetrazolium test was used (Moore R.P. Int Seed Testing Ass Proc. 1969; 34:233). In said method, living cells are stained red by means of the reduction of a tetrazolium salt, which is colorless, to form a red formazan. Emphasis is placed on the need to know the viability of the different parts of the embryo for predicting the development of embryos and their conversion into germ cells that can be counted (Moore R.P. Viability of seeds. 1973:94-113). In the case of S. *arvensis,* as observed in Table 3, it apparently seems to resist higher doses of the compounds. However, DHPG presents the same action pattern as in the monocotyledon previously studied (L *rigidum).* When this plant was grown in the presence of each of the studied compounds, it was observed that fungi proliferated to a greater extent in the presence of HT and to a lesser extent with the HT+DHPG mixture, clearly showing that HT induces the growth of fungi.

In the case of the species *C. album,* as observed in Table 3, the mixture of HT+DHPG is more effective as an herbicide against said species than any other compound, since the mixture is capable of reducing by 90% the germination of *C. album* at a lower dose (710 ppm) than the one used in the case of DHPG (>4000 ppm) or HT (1800 ppm). Although it is true that at the dose of 125 ppm of DHPG there is a considerable reduction in germination followed by a decrease in the variables to be studied. However, at said dose of 125 ppm of DHPG, the lethal LD90 dose, which ensures safe control of the species, is not reached.

When said crops of weeds were treated with the different doses of the herbicide flazasulfuron (the same as the phenolic compounds studied, as indicated above) it was demonstrated that said compound is very effective in the treatment of the weeds, for both monocotyledons and dicotyledons, an LD90 of 90 ppm being obtained with said herbicide.

Therefore, these results clearly show that the use of DHPG shows herbicidal activity, being capable of controlling

growth of the weeds *L. rigidum* (inh- EPSPS), *L. rigidum* (inh- ACCase and ALS), *S. arvensis* and *C. album,* when they were used at doses similar to those used with the herbicide flazasulfuron.

The same test was then carried out but in crops of agricultural interest. Table 4 shows the concentration values expressed in ppm of each of the compounds analyzed for reaching LD90, as well as the doses of each extract that induced the growth of crops of agricultural interest.

**Table 4.** LD90 and dose acting as a growth activator of the different species of agricultural interest tested with the different compounds expressed in ppm of active ingredient. Values > means that the LD90 has not been reached.

| | LD90 | | | Growth activating dose (ppm) | | |
|---|---|---|---|---|---|---|
| **Species** | **HT** | **DHPG** | **HT+DHPG** | **HT** | **DHPG** | **HT+DHPG** |
| *L. sativa L.* | 7500 | >4000 | 3000 | | 100 | |
| *L. esculentum L.* | 460 | 3560 | 460 | | | |
| *S. tuberosum L.* | 1790 | >4000 | > 12000 | | 200 | |
| *S. melongena L.* | 1290 | 3890 | 780 | | | |
| *Capsicum L.* | 1420 | 978 | 970 | | | |
| *C. sativus* L. | 3700 | >4000 | 1760 | | | |
| *C.pepo* L. | 6790 | >4000 | 1720 | | | |
| *C. lanatus* L. | 480 | 1970 | 490 | | | |
| *A. officinalis* L. | 7860 | >4000 | 375 | | | |
| *A.cepa* | 1375 | >4000 | 495 | | | |
| *T. aestivum* | 750 | >4000 | 3000 | 100 | 500 | 100 |

The results shown for the species *Triticum aestivum* against the different doses of the tested compounds clearly showed that HT affects the germination of said species from 500 ppm dose, but it behaves like a "dirty" compound since it increases the development of fungi in seeds and therefore induces contamination of the crop. The dose of HT which reduces germination, the weight, the number of roots, the length of roots and the length of the plumule by 90% (LD90) is equivalent to 750 ppm. On the contrary, when crops of *T. aestivum* were treated with the HT+DHPG mixture, the LD90 was 3000 ppm. Said dose affected the already germinated seeds in every way.

This mixture acts like an enhancer for germination, the weight, the generation of roots, the length of same and of the plumule at a dose of 100 ppm. For the case of the crops of *T. aestivum* treated with the different doses of DHPG, it was observed that the antigerminative action in this species barely reaches 50 %, which is important data to be used in the control of the weeds *Lolium spp.* on wheat crops. Surprisingly, an increase in germination is observed at doses of 500 ppm, as occurs in fresh weight, said compounds also working as a growth and germination enhancer in these crops. The production of roots takes place at smaller doses (125 ppm) and the increase in the length thereof takes place at even lower doses (100 ppm). For the development of the plumule, 75 ppm is sufficient to considerably increase its length.

The results summarized in Table 4 for the species *Lactuca sativa L.* (Lettuce Cervantes var.) treated with the different tested concentrations of HT, DHPG or HT+DHPG, have clearly shown that after 4000 ppm of DHPG, the weight, the length of the root and of the cotyledons of said crops begin to be affected. However, LD90 for germination was not reached. At a dose of 100 ppm of DHPG, an increase in fresh weight with respect to the control is observed. Treatment with HT in said species induced fungal contamination due to the extract and the dose which affected germination and weight, development of roots and cotyledons, was about 7500 ppm, which was a very high dose. Furthermore, treatment with the HT+DHPG mixture clearly showed that the LD90 was obtained at the dose of 2980 ppm and the dose at which a pronounced decrease in fresh weight, roots and length of the cotyledons started to be observed was 300 ppm.

For crops of the species *Solanum tuberosum L.* (potato var. Red Pontiac), the different doses of DHPG did not affect germination (LD90 > 4000 ppm). However, a rise in the increase in weight of the root formed at a dose of 200 ppm is observed. Treatment with HT at different concentrations clearly showed that the LD90 dose was obtained at 1790 ppm. Said dose also affects the fresh weight of the root formed in the germination stage and it is also observed that at high doses of HT, the rot thereof occurs. The treatment of said crops with the HT+DHPG mixture at different doses demonstrated that the LD90 > 12000 ppm, but from a dose of 3000 ppm, the effect on germination is pronounced. However, it is observed that there is an increase in weight of the root in which they have germinated.

As observed in Table 4, the behavior of the species *A. cepa* (Onion Galaxia var.) against different doses of

DHPG clearly showed a sudden decrease in the percentage of germination at very low doses, between 25 and 50 ppm. However, the LD90 for this crop was obtained at much higher doses 4000 ppm. When said crops were treated with different doses of HT or HT+DHPG, an LD90 was obtained at the dose of 1375 ppm and 495 ppm, respectively.

The species *Lepidium sativum L.* (garden cress) is a species which is used as an indicator of products which may present phytotoxicity since it is extremely sensitive. The compounds analyzed in the present invention demonstrated being phytotoxic, even in small doses. Specifically, treatment with DHPG induced a sudden decrease in germination of said plant at doses between 25 and 50 ppm. However, the LD90 for this crop is at doses higher than 4000 ppm.

*Asparagus officinalis L.* (Asparagus Atlas var.) did not germinate well in the experiments, so the topographical tetrazolium method was used to determine the living seeds. The LD90 obtained in this test is 7860, >4000, 375 ppm for HT, DHPG and HT+DHPG, respectively.

In a general manner, the results shown in Table 4 clearly show that treatment with DHPG at low doses is effective against the germination of weeds, whereas for generating toxic effects on the different species of agricultural interest tested, this compound needs a higher concentration. However, it is true that treatment with DHPG shows an effect which favors germination when it is used at low concentrations for the crops of *L. sativa L.* (lettuce), *S.tuberosum L* (potato) and *T. aestivum* (wheat). Thus, DHPG is useful as a plant growth regulator, being capable of presenting herbicidal activity against weeds and growth-enhancing activity in crops of agricultural interest. In this sense and as discussed above, for the particular case of crops of *T. aestivum,* the antigerminative action of this compound in this species barely reaches 50 %, which is important data to be used in the control of *Lolium* spp. on wheat crops. Curiously, in said crops of *T. aestivum* it is observed that treatment with DHPG at the dose of 500 ppm induces an increase in germination of said crops, as well as an increase in the fresh weight of said crops, DHPG thus functioning as a growth and germination enhancer in these crops. With respect to the rest of the variables analyzed, it is interesting to point out that the production of roots occurs with low doses of DHPG (125 ppm) and the increase in the length thereof at even lower doses, 100 ppm. For the development of the plumule, 75 ppm of DHPG was sufficient for considerably increasing its length.

As can be observed in Table 4, treatment of the seeds with HT at the different doses tested was capable of controlling weed growth, but it has the drawback of producing fungi and ultimately contaminating the seeds. For the case of the HT+DHPG mixture, it is observed in the data shown in Table 4 that there are doses which induce the germination of crops, but in turn also enhance weed growth, therefore it is neither a valid nor an effective treatment.

The results obtained for the positive controls (crops treated with the herbicide FZS clearly showed that the LD90 for different species were at very low doses thereof, about 90 ppm, thus leaving a record of the effectiveness of said herbicide for both monocotyledon and dicotyledon crops.

Therefore, HT is capable of controlling weed growth, but it has the drawback of producing fungi and ultimately contaminating the seeds. The mixture of HT+DHPG also has problems since the doses used for controlling weed growth are borderline with the doses which prevent crop growth, so it is not a useful candidate as a plant growth regulator either. In contrast, the results have demonstrated that DHPG is the main candidate for acting as a plant growth regulator, being effective as an herbicide, since in addition to presenting significant differences between the weeds and the crops, it presents advantages at low doses, such as being a germination and growth activator.

**Example 3. Analysis of the plant growth regulating activity of the DHPG compound in early post-emergence tests, both in weeds and in agricultural crops.**

Plants in the first growth development stage were planted in cells of 25 $cm^3$ with a substrate made up of a mud:peat (1:1 ratio) mixture and treated with HT, DHPG or HT + DHPG at different doses. The species of weeds and agricultural crops tested are those described in Table 5 and Table 6, respectively. The doses tested for each of the treatments were:

HT: 400, 800, 1600, 3200 and 6400 g active ingredient/ha
DHPG: 40, 80, 400, 800 and 1600 g active ingredient/ha
HT+DHPG: 400, 800, 1600, 3200 and 4800 g active ingredient/ha (in reference to the HT component-HT:DHPG proportion is 1:10).

All the crops of the study to which no treatment was applied were used as negative control. For the case of analyzing herbicidal activity in weeds (all the species will be used), the herbicide flazasulfuron will be used as positive control at the same doses as the tested compounds.

After the application of each of the treatments to be tested, the cells were introduced in a controlled growth chamber (Fitotron; Weiss Technik; United Kingdom) under the following conditions: day/night temperature of 27/18 °C; photoperiod of 14 h; and light 580 $\mu mol\ m^{-2}\ s^{-1}$, for a period of 20 days, at which time the vegetation was cut and weighed immediately thereafter, and curves of decrease of fresh weight were constructed according to the concentrations of each

of the extracts tested and the species tested. 10 plants were used as repetitions per treatment and species).

Each of the aforementioned treatments was applied via leaf spraying in the case of the crops of weeds, since it is the usual mode of application for this type of vegetation, whereas for the case of the species of agricultural interest, each of the treatments tested was also applied by directly washing the stem to corroborate if there were differences between both types of application on the final result. Any of the applications known to a person skilled in the art can be used for the compounds of the present invention. In the case of leaf spraying, a volume of broth of 400L/ha was prepared, whereas for washing one of 10000 L/ha was prepared.

**Table 5.** Species of weeds tested.

| **Monocotyledons** | **Dicotyledons** |
|---|---|
| *Lolium spp.* (leaf spraying) | *Conyza spp.* (leaf spraying) |

**Table 6.** Species of agricultural crops tested.

| **Monocotyledons** | **Dicotyledons** |
|---|---|
| *Gramineae:*<br>▪ *Triticum aestivum* (Common wheat) [Leaf spraying] | *Compositae:*<br>▪ *Lactuca sativa L. (Lettuce Cervantes var.)* [Leaf spraying] |
| *Liliaceae:*<br>▪ *Allium cepa* (Onion var. *Galaxia*) [Leaf spraying and direct washing] | *Solanaceae:*<br>▪ *Lycopersicum esculentum L. (Tomato Tres cantos var.)* [Leaf spraying and direct washing]<br>▪ *Solanum tuberosum L. (Potato Red Pontiac var.)* [Leaf spraying]<br>▪ *Solanum melongena L. (Aubergine Round Smooth var.)* [Leaf spraying and direct washing]<br>▪ *Capsicum L. (Pepper Italian var.)* [Leaf spraying and direct washing] |
| | *Cucurbitaceae:*<br>▪ *Cucumis sativus* L. (Cucumber Bellpuig var.) [Leaf spraying and direct washing]<br>▪ *Cucurbita pepo* L. (Courgette Diamante var.) [Leaf spraying and direct washing]<br>▪ *Citrullus lanatus* L. (Watermelon Meridian var.) [Leaf spraying and direct washing] |
| | *Asparagaceae:*<br>▪ *Asparagus officinalis* L. (Asparagus Atlas var.) [Leaf spraying] |

The results obtained for weed control using the different aforementioned concentrations of HT, DHPG or HT+DHPG on the species *Lolium spp* by means of application on the leaf clearly showed that solely the treatment with DHPG was capable of controlling the growth of said weed. The effective dose ED90 for this species when it was treated with said extract was 575 g active ingredient/ha, and the dose of 1600 ppm achieved absolute control of its growth, whereas the dose ED90 for HT and HT+DHPG was >3200 g active ingredient/ha and > 4800 g active ingredient/ha, respectively, so said treatments were not capable of controlling the growth of this weed (Table 7). In the case of the crops of the species *Conyza spp* treated with the different aforementioned concentrations of HT, DHPG or HT+DHPG, the same results were obtained as for the species *Lolium spp.* Exclusively, treatment with DHPG was capable of controlling the growth of said weed. The ED90 for this species when it was treated with DHPG is 580 g active ingredient/ha (Table 7). Absolute growth control occurred at 800 g active ingredient/ha.

**Table 7.** LD90 and dose acting as a growth activator of the different species with the different compounds (expressed in grams of active ingredient/ha).

| | LD90 | | | Growth activating dose | | |
|---|---|---|---|---|---|---|
| **Species** | **HT** | **DHPG** | **HT+DHPG** | **HT** | **DHPG** | **HT+DHPG** |
| *Lolium spp.* | >3200 | 575 | >4800 | | | |
| *Conyza spp.* | >3200 | 580 | >4800 | | | |
| *L. sativa L.* | >6800 | >1600 | >4800 | | | |
| *L. esculentum L.* | >6800 | >1600 | >4800 | | | |
| *S. tuberosum L.* | 1920 | >1600 | >4800 | | 400 | |
| *S. melongena L.* | >6800 | >1600 | 4800 | | | |
| *Capsicum L.* | >6800 | >1600 | >4800 | | | |
| *C. sativus* L. | >6800 | 1600 | 4800 | | | |
| *C. pepo* L. | >6800 | >1600 | 2800 | | | |
| *C. lanatus* L. | >6800 | >1600 | 4800 | | | |
| *A. officinalis* L. | >6800 | >1600 | >4800 | | | |
| *A. cepa* | >6800 | >1600 | >4800 | | | |
| *T. aestivum* | 1520 | >1600 | >4800 | | 400 | |

As observed in Table 7, for the case of the crops of agricultural interest, it should be pointed out that none of the doses of the compounds used caused phytotoxicity in the tested crops. Furthermore, it should be pointed out that treatment with DHPG induced an increase in weight and vigor in the crops of *T. aestivum* and *S. tuberosum* at doses greater than 400 g active ingredient/ha.

Thus, the results shown in Table 7 clearly show that the crops showed vigor and good development against the different doses of the different compounds. Negative effects were observed in some of the crops. The compound which showed the most negative effect was the HT+DHPG mixture, although considering the dose, it is not as important as those caused by DHPG in cucumber. It must be taken into account that in leaf spraying, HT causes spots on the leaves of the plants which look like fungi. The most important aspect of the results shown in Table 7 to be highlighted is that DHPG presents growth-enhancing activity, which can be observed very well in the crops of S. *melongena L.* (aubergine). The doses supported in plants with two to four true leaves are very high because the plant has already developed mechanisms allowing it to resist higher doses.

**Example 4. Analysis of the plant growth regulating activity of the DHPG compound in late post-emergence tests, both in weeds and in agricultural crops.**

Although in the preceding example it was demonstrated that treatment with the DHPG compound has a lower effect on induction of growth and germination in already developed plants, said plants are known to be more susceptible to certain treatments under conditions of stress. Therefore, the activity of the DHPG compound has been analyzed when administered in crops of: *Lycopersicum esculentum* L. (tomato); *Allium cepa* (onion); *Capsicum* L. (pepper); *Cucurbita pepo* L. (courgette); *Lactuca sativa* L. (lettuce); *Solanum melongena* L. (aubergine) and *Asparagus officinalis* L. (asparagus), when said crops were in the late post-emergence stage, and furthermore under conditions of abiotic stress (absence of irrigation caused by 2 days without irrigation-1 irrigation-3 days without irrigation-1 irrigation). The application of HT, DHPG and HT+DHPG has been performed by spraying in all cases.

**Table 8.** LD90 of the different species with the different compounds (expressed in grams of active ingredient/ha).

| | LD90 | | |
|---|---|---|---|
| **Species** | **HT** | **DHPG** | **HT+DHPG** |
| *L. sativa L.* | >6800 | >1600 | >4800 |
| *L. esculentum L.* | >6800 | >1600 | >4800 |

(continued)

| | LD90 | | |
|---|---|---|---|
| **Species** | **HT** | **DHPG** | **HT+DHPG** |
| *S. melongena L.* | >6800 | >1600 | 4800 |
| *Capsicum L.* | >6800 | >1600 | >4800 |
| *C. pepo* L. | >6800 | >1600 | 2800 |
| *A. officinalis* L. | >6800 | >1600 | >4800 |
| *A. cepa* | >6800 | >1600 | >4800 |

The crops present a positive response to the different doses of the different compounds regardless of whether or not there are affected leaf areas. This indicates that the damage is minimal since a rapid recovery thereof followed by improved leaf development is observed.

The results shown in Table 8 clearly show that the species analyzed at very high stages of development are not susceptible to the tested compounds, not even at very high doses.

**Example 5. Analysis of the herbicidal activity of the DHPG compound in pre-emergence stages in the field.**

The analysis of the herbicidal activity of the DHPG compound in pre-emergence stages (germination) in the field was performed in horticultural crop plots in Huétor-Tajar (Granada, Spain). DHPG and the HT+DHPG mixture were tested, which showed herbicidal activity in the preceding pre-emergence examples. Said compounds were applied on the leaves by spraying, using a volume of broth of 400 L/ha, and the doses used were:

- DHPG: 40, 400 and 800 g of active ingredient/ha
- HT+DHPG: 400, 800 and 1600 g of active ingredient/ha.

The herbicide Flazasulfuron was used as positive control at doses of 100, 200 and 1000 g/ha.

In addition to the exclusive treatment with each of the tested compounds, the herbicidal activity was analyzed by adding to each one of them an adjuvant. The selected adjuvants were Araoil (paraffin oil, Fitalbi, Spain) which is an emulsifiable concentrate with insecticidal activity by contact for pest control), and Biopower (alkylethersulfate, Bayer, Germany) which is a surfactant (non-ionic wetting) coadjuvant recommended for increasing the efficacy of herbicides which are applied by contact to improve wetting.

4 repetitions were performed for each treatment in 2x10 $m^2$ plots. The results clearly show that the commercial herbicide Flazasulfuron is the most effective. In contrast, DHPG and the HT+DHPG mixture without the presence of additives, enhance growth. When each of the additives tested is independently added to said extracts, the herbicidal efficacy of said compositions increases considerably, mainly when the composition comprises the adjuvant Biopower, so the mixture of the two with the adjuvant is also expected to improve.

Additional tests, shown in Examples 7 and 8, were carried out to determine the action of the adjuvants on leaf penetrability of the compounds and on the stabilization in soil thereof.

**Example 6. Analysis of leaf absorption and stability of the DHPG compound and of the mixture (DHPG+HT) in pepper plants.**

For the purpose of analyzing the amount of DHPG and HT+DHPG which the leaves of a plant are capable of absorbing, as well as the stability of said extracts after absorption, said variables were tested in pepper plant leaves. Briefly, 18 plantlets of *Capsicum* L. (pepper Italian var.) are transplanted in pots with peat, watered, and left to grow for 5 days. Two leaves from each pot were selected and marked for performing the test in duplicate.

Starting from DHPG (3.5 g/L) three solutions of 1000, 500 and 100 ppm of DHPG were prepared. The same was done with the DHPG + HT mixture, the concentrations of which were 1.2 and 13.6 g/L, respectively. The solutions of the mixture also corresponded to 1000, 500 and 100 ppm of DHPG with respect to HT. These concentrations were selected according to the stability the plants presented against these concentrations in the preceding examples. Furthermore, the adjuvants Araoil (paraffin oil which is applied on the extract at 0.5 %) or Biopower (alkylethersulfate which is applied on the extract al 1 %) were also applied to each of the tested compounds.

Once 5 days had lapsed and the desired size of each plant was reached, the test begins by applying 0.1 mL of each compound with a syringe for each concentration and each coadjuvant on the leaves of each plant in duplicate.

Once the different compounds with the respective coadjuvants were applied, it is left to dry for two hours and the leaves of each pot are washed with 10 mL of methanol/water at 50% for the purpose of entraining the amount of compound that the plant did not absorb. The washing is collected in Petri dishes and the concentration thereof is determined in HPLC.

Table 9 shows the results in the form of percentage of active ingredient (DHPG) absorbed per treated leaf and obtained by means of HPLC and fluorescence.

**Table 9.** Percentage of 3,4 DHPG absorbed per treated leaf.

| Treatment | DHPG added (mg) | DHPG extracted (mg) | % active ingredient absorbed |
|---|---|---|---|
| DHPG 1000 ppm (1) | 0.1 | 0.0984 | 1.60 |
| DHPG 1000 ppm (2) | 0.1 | 0.0785 | 21.44 |
| DHPG 1000 ppm + Bio (1) | 0.1 | 0.0513 | 48.68 |
| DHPG 1000 ppm + Bio (2) | 0.1 | 0.0917 | 8.24 |
| DHPG 1000 ppm+Ara (1) | 0.1 | 0.0510 | 48.97 |
| DHPG 1000 ppm+Ara (2) | 0.1 | 0.0381 | 61.90 |
| HT+DHPG 1000 ppm (1) | 0.1 | 0.0110 | 8.89 |
| HT+DHPG 1000 ppm (1) | 0.1 | 0.0115 | 8.85 |
| HT+DHPG 1000 ppm +Bio (1) | 0.1 | 0.0058 | 9.42 |
| HT+DHPG 1000 ppm + Bio (2) | 0.1 | 0.0059 | 9.41 |
| HT+DHPG 1000 ppm +Ara (1) | 0.1 | 0.0082 | 9.17 |
| HT+DHPG 1000 ppm + Ara (2) | 0.1 | 0.0081 | 9.18 |
| DHPG 500 ppm (1) | 0.05 | 0.0065 | 86.88 |
| DHPG 500 ppm (2) | 0.05 | 0.0108 | 78.33 |
| DHPG 500 ppm + Bio (1) | 0.05 | 0.0019 | 96.02 |
| DHPG 500 ppm + Bio (2) | 0.05 | 0.0034 | 93.14 |
| DHPG 500 ppm+Ara (1) | 0.05 | 0.0113 | 77.28 |
| DHPG 500 ppm+Ara (2) | 0.05 | 0.0148 | 70.32 |
| HT+DHPG 500 ppm (1) | 0.05 | 0.0030 | 9.39 |
| HT+DHPG 500 ppm (1) | 0.05 | 0.0026 | 9.47 |
| HT+DHPG 500 ppm +Bio (1) | 0.05 | 0.0019 | 9.60 |
| HT+DHPG 500 ppm + Bio (2) | 0.05 | 0.0019 | 9.62 |
| HT+DHPG 500 ppm +Ara (1) | 0.05 | 0.0032 | 9.34 |
| HT+DHPG 500 ppm + Ara (2) | 0.05 | 0.0037 | 9.26 |
| DHPG 100 ppm (1) | 0.01 | 0.0015 | 84.46 |
| DHPG 100 ppm (2) | 0.01 | 0.0004 | 95.57 |
| DHPG 100 ppm + Bio (1) | 0.01 | 0.0003 | 96.29 |
| DHPG 100 ppm + Bio (2) | 0.01 | 0.0004 | 95.83 |
| DHPG 100 ppm+Ara (1) | 0.01 | 0.0015 | 84.18 |
| DHPG 100 ppm+Ara (2) | 0.01 | 0.0014 | 85.15 |
| HT+DHPG 100 ppm (1) | 0.01 | 0.00003 | 9.96 |
| HT+DHPG 100 ppm (1) | 0.01 | 0.00003 | 9.97 |
| HT+DHPG 100 ppm +Bio (1) | 0.01 | 0.00003 | 9.96 |
| HT+DHPG 100 ppm + Bio (2) | 0.01 | 0.00003 | 9.96 |

(continued)

| Treatment | DHPG added (mg) | DHPG extracted (mg) | % active ingredient absorbed |
|---|---|---|---|
| HT+DHPG 100 ppm +Ara (1) | 0.01 | 0.00041 | 9.58 |
| HT+DHPG 100 ppm + Ara (2) | 0.01 | 0.00046 | 9.53 |

It can be clearly observed in Table 9 how at the concentration of 1000 ppm of DHPG, absorption is much lower in all cases compared with the concentrations of 500 and 100 ppm. In the case of the HT+DHPG mixture, the percentage of absorption is maintained in all cases around 10%, regardless of the initial concentration of each active ingredient, clearly showing that a higher amount is absorbed by part of the leaves when the HT+DHPG mixture is used than when DHPG is used alone. Variability between samples and the high absorption of DHPG when used at concentrations of 500 ppm and 100 ppm, both directly, and in combination with the adjuvants Biopower or Araoil, is also noteworthy. Nonetheless, it can be seen that the use of adjuvants does not improve in a noteworthy manner the absorption of DHPG, above 80% of which is absorbed at concentrations of 100 and 500 ppm.

**Example 7. Analysis of the stability of the DHPG compound in wheat crops during germination.**

The objective of this test is to determine the stability of an extract of DHPG of 5 g/L diluted at different concentrations (50, 100, 200, 500, 1000 and 2000 ppm) during the germination process of *Triticum durum* (durum wheat) seeds. Said seeds were provided by the Department of Agricultural Chemistry and Edaphology of the University of Cordoba. They are submerged in a 1 % sodium hypochlorite solution for 10 seconds to break the hull and facilitate germination, then rinsed with distilled water and left to dry. Once dried, seven sterile Petri dishes with respective filter paper discs are prepared and 15 wheat seed are placed in each of them. Next, 5 mL of the different concentrations of DHPG indicated above and a blank with distilled water are added. The Petri dishes are sealed with parafilm and are left for 48 h at 4 °C in the dark. After said time lapsed, they are taken out of the cold chamber and left to germinate for another 3 days, preventing the direct incidence of sun rays. 5 days after the start of the test, samples of the supernatant are taken and the concentration of DHPG in each plate is determined using HPLC-UV at 280 nm. The chromatography (HPLC) profiles obtained clearly show that other compounds are not formed by degradation or oxidation of DHPG and that DHPG is maintained, verifying the stability of the DHPG compound in the seed without any type of adjuvant. Table 10 below shows the concentration of the DHPG compound extracted from each of the tested germination plates.

**Table 10.** Concentration of DHPG extracted from each germination plate of crops of T. *durum.*

| $[DHPG]_{initial}$ (mg/mL) | $[DHPG]_{final}$ (mg/mL) | % extracted |
|---|---|---|
| 0 | 0 | 0 |
| 50 | 94.78 | 189.50 |
| 100 | 143.22 | 143.22 |
| 200 | 198.02 | 99.01 |
| 500 | 399.06 | 79.81 |
| 1000 | 977.82 | 97.80 |
| 2000 | 1913.33 | 95.70 |

It can be observed in Table 10 that after 5 days most of the DHPG remains as such in contact with the seed. It should be pointed out that in two of the concentrations, data above the initial value has been obtained, such as for 50 and 100 ppm, which may be due to the fact that the solution impregnating the plate may have been concentrated, or that part of that compound is even endogenous to the plant.

**Example 8. Effect of solar radiation on soil samples impregnated with DHPG.**

For the purpose of determining the influence of solar radiation on DHPG once it is impregnated in the crop soil, untreated soil samples of the plots in which the field studies were conducted in Huetor-Tájar (Granada) were taken and spread out on trays measuring 0.53 x 0.38 m equivalent to 0.2 $m^2$ of surface. Starting from the extract with a concentration of 3.5 g/L of DHPG, 1000, 500 and 100 ppm solutions were prepared, and 25 mL of each solution were sprayed on the

trays. Said volume was determined knowing that in the field, at least 400 L of broth has been used per ha. Three trays were thus prepared, one for each concentration of extract, divided into two well distinguished parts, one of which is exposed to solar radiation and the other is safeguarded from said radiation by covering it with aluminum foil, which is completely opaque to radiation. A sample was taken at time zero and two more were each taken at 24 h. For each sample, 10 g of soil were weighed and cold extracted with 10 mL of a methanol/water mixture (80:20 (v/v)) and with stirring for one hour. Next, the extracted soil was centrifuged and filtered. The extracted concentration of DHPG was determined by HPLC-Fluorescence. Table 11 expresses the amounts of 3,4 DHPG determined per gram of soil at time 0, 24 and 48 h after application.

**Table 11.** Amount of DHPG added and extracted in the soil samples exposed to solar radiation or in the dark.

| [DHPG] | mg DHPG g/$m^2$ added | mg DHPG g/$m^2$ soil 0h | mg DHPG g/$m^2$ soil 24h | mg DHPG g/$m^2$ soil 48h |
|---|---|---|---|---|
| 100 ppm light | 4.00 | 0.83 | 0.78 | 0.37 |
| 100 ppm dark | 4.00 | 0.81 | 0.73 | 0.29 |
| 500 ppm light | 20.00 | 7.65 | 7.65 | 3.91 |
| 500 ppm dark | 20.00 | 6.66 | 4.04 | 2.87 |
| 1000 ppm light | 40.00 | 31.20 | 9.82 | 1.56 |
| 1000 ppm dark | 40.00 | 22.46 | 8.73 | 0.87 |

It is observed in Table 11 that by adding DHPG to the crop soil, a large part of the DHPG compound is not recovered in the first extracts and its concentration in the soil gradually decreases over time, drastically dropping at 48 h. It must be pointed out that at the lowest concentration, no differences are can be seen between the test with and without light, however at the two highest concentrations differences can be seen, with the highest values being those with solar incidence. The values that remain the highest are those corresponding to the concentration of 500 ppm, with a greater drop in concentration being observed for 1000 ppm. This test verifies that DHPG can remain stable, regardless of solar light, in soil for a period of 48 hours without the use of adjuvants.

**Example 9. Oxidation tests of the DHPG compound at acidic pH and basic pH of the sample.**

To demonstrate that DHPG does not degrade in aqueous solution, at both acidic and basic pH, a forced oxidation test was performed at two pHs.

First, oxidation kinetics of the extract rich in DHPG was performed under conditions of low concentration at room temperature and with a continuous airflow, and at the original pH of the sample, acidic pH (6.3). Briefly, an extract of DHPG was used which had a concentration of 0.4 g/L at 96 % purity (it is the same extract as that which was used in the preceding examples for the antigerminative tests) and two test tubes with 5 mL of said extract in each tube were taken. A direct oxygen stream was passed through respective tubes, measuring the concentration of DHPG according to the kinetic profile shown in Table 12.

**Table 12.** Oxidation kinetics of the DHPG compound at acidic pH 6.3.

| Time (h) | [DHPG] g/L | $V_{final\ DHPG\ (mL)}$ | total g DHPG |
|---|---|---|---|
| 0 | 0.40 | 5.00 | 2.00 |
| 0.5 (duplicate 1) | 0.40 | 5.00 | 2.00 |
| 0.5 (duplicate 2) | 0.40 | 5.00 | 2.00 |
| 1 (duplicate 1) | 0.46 | 4.35 | 2.00 |
| 1 (duplicate 2) | 0.47 | 4.25 | 2.00 |
| 2 (duplicate 1) | 0.56 | 3.50 | 1.96 |
| 2 (duplicate 2) | 0.57 | 3.50 | 1.96 |
| 3 (duplicate 1) | 0.70 | 2.85 | 1.99 |
| 3 (duplicate 2) | 0.60 | 3.30 | 1.98 |

(continued)

| Time (h) | [DHPG] g/L | V $_{final\ DHPG\ (mL)}$ | total g DHPG |
|---|---|---|---|
| 4 (duplicate 1) | 0.81 | 2.35 | 1.90 |
| 4 (duplicate 2) | 0.92 | 2.15 | 1.98 |
| 5 (duplicate 1) | 1.15 | 1.70 | 1.95 |
| 5 (duplicate 2) | 1.51 | 1.30 | 1.96 |
| 8 (duplicate 1) | Solid | 0 | 2.01 |
| 8 (duplicate 2) | Solid | 0 | 1.98 |

As can be seen, the concentration of the DHPG compound increases due to the effect of the evaporation of the sample, but the amount of DHPG remains constant over time, whereby it can be concluded that with an oxygen stream and after five hours of testing, no loss of the main component of the extract can be seen. This continued until taking the extract to dryness (8 hours), at which time the solid was dissolved again to the initial volume and the concentration was determined, observing that none of the initial DHPG compound had been lost.

The same test described above was carried out, but at pH 8. To that end, 20 mL of the same extract mentioned above were taken, and it was taken to pH 8 with a 10 % NaOH solution. One mL of sample was taken in duplicate, and an oxygen stream was passed through same until dryness (Table 13). Next, it was dissolved again with 1 mL of distilled water and its concentration was measured, performing the entire test in duplicate.

**Table 13.** Oxidation kinetics of the DHPG compound at basic pH 8.

| Time (h) | [DHPG] g/L | V $_{final\ DHPG\ (mL)}$ | total g DHPG |
|---|---|---|---|
| 0 | 0.40 | 5.00 | 2.00 |
| 0.5 (duplicate 1) | 0.40 | 5.00 | 2.00 |
| 0.5 (duplicate 2) | 0.40 | 5.00 | 2.00 |
| 1 (duplicate 1) | 0.48 | 4.20 | 2.00 |
| 1 (duplicate 2) | 0.46 | 4.25 | 1.97 |
| 2 (duplicate 1) | 0.64 | 3.05 | 1.95 |
| 2 (duplicate 2) | 0.64 | 3.10 | 1.98 |
| 3 (duplicate 1) | 0.74 | 2.60 | 1.92 |
| 3 (duplicate 2) | 0.76 | 2.45 | 1.87 |
| 4 (duplicate 1) | 0.90 | 2.00 | 1.80 |
| 4 (duplicate 2) | 0.86 | 2.10 | 1.81 |
| 5 (duplicate 1) | 2.09 | 0.85 | 1.78 |
| 5 (duplicate 2) | 1.98 | 0.95 | 1.88 |
| 8 (duplicate 1) | Solid | 0 | 1.75 |
| 8 (duplicate 2) | Solid | 0 | 1.90 |

As indicated above when the pH is acidic, a basic pH does not cause a significant loss of the DHPG compound either due to oxidation when the extract rich in said compound is subjected to basic pH. Therefore, it is concluded that under the tested conditions, acidic pH (pH 6.3) and basic pH (pH 8), no oxidation of the DHPG compound takes place.

Therefore, the present invention demonstrates the plant growth regulating character of DHPG as a natural compound, and that the use of adjuvants substantially improves its field activity. The use of said adjuvants, in combination with the DHPG compound, as demonstrated in the present invention, exerts a different effect than what the adjuvants should exert and for which they are designed, since DHPG penetrates the plant, remains stable in the seed and in the soil regardless of the pH or solar incidence, without the aid of said adjuvants.

## Claims

1. Use of 3,4 dihydroxyphenylglycol (DHPG) as a plant growth regulator.

2. The use according to claim 1, wherein the DHPG is obtained from by-products derived from olive oil extraction and/or the table olive industry, and comprises a concentration of DHPG which ranges from 1 to 50000 ppm.

3. The use according to anyone of claims 1 to 2, wherein the plant growth regulating activity is selected from herbicidal activity against weeds or growth-enhancing activity for agricultural crops.

4. The use according to claim 3, wherein the herbicidal activity is carried out when a concentration which ranges from 100 to 50000 ppm of DHPG is applied.

5. The use according to claim 4, wherein the herbicidal activity is carried out when a concentration which ranges from 500 to 9000 ppm of DHPG is applied.

6. The use according to claim 3, wherein the growth-enhancing activity is carried out when a concentration which ranges from 1 to 1500 ppm of DHPG is applied.

7. The use according to claim 6, wherein the growth-enhancing activity is carried out when a concentration which ranges from 1 to 500 ppm of DHPG is applied.

8. The use according to any of claims 1 to 7 in combination with at least one adjuvant.

9. The use according to claim 8, wherein the adjuvant is selected from the list consisting of: oil-based adjuvants and mixtures, organosilicone-based adjuvants and mixtures, non-ionic-based adjuvants and mixtures, polymer-based adjuvants and mixtures, and fatty acid-based adjuvants and mixtures, and combinations thereof.

10. The use according to claim 9, wherein the adjuvant is selected from araoil and/or biopower.

11. An extract obtained from by-products derived from olive oil extraction and/or the table olive industry, **characterized in that** comprises a concentration of DHPG which ranges from 1 to 50000 ppm.

12. A plant growth regulating composition comprising DHPG according to any of claims 1 to 7 and/or an extract according to claim 11.

13. The composition according to claim 12 further comprises at least one adjuvant.

14. The composition according to any of claims 12 to 13, **characterized in that** the adjuvant is selected from any of the list consisting of: oil-based adjuvants and mixtures, organosilicone-based adjuvants and mixtures, non-ionic-based adjuvants and mixtures, polymer-based adjuvants and mixtures, and fatty acid-based adjuvants and mixtures, and combinations thereof.

15. The composition according to any of claims 13 to 14, wherein the adjuvant is selected from araoil and/or biopower.

16. The composition according to any of claims 12 to 15, **characterized in that** the DHPG concentration ranges from 1 to 50000 ppm.

17. The composition according to any of claims 12 to 16, **characterized in that** has herbicidal activity when the DHPG is at a concentration which ranges from 100 to 50000 ppm and growth-enhancing activity when the DHPG is at a concentration which ranges from 1 to 1500 ppm.

18. The composition according to any of claims 13 to 17, **characterized in that** has herbicidal activity when the DHPG is at a concentration which ranges from 500 to 9000 ppm and growth-enhancing activity when the DHPG is at a concentration which ranges from 1 to 500 ppm.

19. A method for weed control which comprises administering to a crop an effective dose of DHPG according to any of claims 1 to 7, the extract according to claim 11, or the composition according to any of claims 12 to 18.

**20.** The method according to claim 19, **characterized in that** the effective dose of DHPG is administered in the range from 100 to 50000 ppm.

**21.** The method according to any of claims 19 to 20, **characterized in that** the effective dose of DHPG is administered in the range from 500 to 9000 ppm.

**22.** The method according to any of claims 19 to 21, wherein the weeds are preferably monocotyledons and/or dicotyledons.

**23.** The method according to claim 22, wherein the monocotyledon plants are selected from any of the following species: *Lolium rigidum*; *Lolium multiflorum,* and the dicotyledons are selected from any of the following species: *Sinapis arvensis, Chenopodium album* and *Stellaria media.*

**24.** The method according to any of claims 19 to 23, **characterized in that** the effective dose of DHPG, the extract, or the composition is administered via spraying, atomization, dispersal, coating, or effusion.

**25.** The method for inducing crop growth which comprises administering to a crop an effective dose of DHPG according to any of claims 1 to 7, the extract according to claim 11, or the composition according to any of claims 12 to 18.

**26.** The method according to claim 25, **characterized in that** the effective dose is administered in the range from 1 to 1500 ppm.

**27.** The method according to any of claims 25 to 26, **characterized in that** the effective dose is administered in the range from 1 to 500 ppm.

**28.** The method according to any of claims 25 to 27, wherein the crops are preferably monocotyledon and/or dicotyledon crops.

**29.** The method according to claim 28, wherein the monocotyledon crops are selected from any of the following species: *Triticum aestivum Allium cepa,* and the dicotyledon crops are selected from any of the following species: *Lepidium sativum L., Lactuca sativa L., Lycopersicum esculentum L., Solanum tuberosum L., Solanum melongena L., Capsicum L.; Cucumis sativus L., Cucurbita pepo L., Citrullus lanatus L., Asparagus officinalis L.*

**30.** The method according to any of claims 25 to 29, **characterized in that** the effective dose of DHPG, the extract, or the composition is administered via spraying, atomization, dispersal, coating, or effusion.

# INTERNATIONAL SEARCH REPORT

International application No.
PCT/ES2017/070724

A. CLASSIFICATION OF SUBJECT MATTER

***A01N31/16*** (2006.01)

According to International Patent Classification (IPC) or to both national classification and IPC

B. FIELDS SEARCHED

Minimum documentation searched (classification system followed by classification symbols)
A01N

Documentation searched other than minimum documentation to the extent that such documents are included in the fields searched

Electronic data base consulted during the international search (name of data base and, where practicable, search terms used)

EPODOC, INVENES, WPI, CAS, GOOGLE SCHOLAR

C. DOCUMENTS CONSIDERED TO BE RELEVANT

| Category* | Citation of document, with indication, where appropriate, of the relevant passages | Relevant to claim No. |
|---|---|---|
| X | ES 2341526 A1 (CONSEJO SUPERIOR INVESTIGACION) 21/06/2010, abstract; description | 11-18 |
| X | ISIDORI M. Model study on the effect of 15 phenolic olive mil wastewater constituents on seed germination and *Vibrio fischeri* metabolism. Journal of agricultural and food chemistry, 17/09/2005, Nº 53, Pages 8414-8417 [on line][retrieved the 17/01/2018]. . figure 1 ; table 1 figure 1 ; table 1 | 1-5,8-10,19-24 |
| X | EL-ABASSI A.. Potential applications of olive mil wastewater as biopesticide for crops protection. Science of the total environment, 22/10/2016, Nº 576, Pages 10-21 [on line][retrieved the 17/01/2018]. . paragraphs 2.3 and 4.3; tables 3 and 6 paragraphs 2.3 and 4.3; tables 3 and 6 | 1-5, 8-10,19-24 |

☐ Further documents are listed in the continuation of Box C. ☒ See patent family annex.

* Special categories of cited documents:
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure use, exhibition, or other means.
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other documents , such combination being obvious to a person skilled in the art
"&" document member of the same patent family

| Date of the actual completion of the international search | Date of mailing of the international search report |
|---|---|
| 17/01/2018 | **(23/01/2018)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. Ojanguren Fernández<br><br>Telephone No. 91 3498468 |

Form PCT/ISA/210 (second sheet) (January 2015)

## INTERNATIONAL SEARCH REPORT

Information on patent family members

International application No.
PCT/ES2017/070724

| Patent document cited in the search report | Publication date | Patent family member(s) | Publication date |
|---|---|---|---|
| ES2341526 A1 | 21.06.2010 | US2012046368 A1 | 23.02.2012 |
| | | WO2010070168 A1 | 24.06.2010 |
| | | EP2377510 A1 | 19.10.2011 |
| | | EP2377510 A4 | 30.07.2014 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1369407 B1

### Non-patent literature cited in the description


- **ALEXIEVA.** *Compt. Rend. Acad. Bulg. Sci.,* 1994, vol. 47, 779-82
- **GUR et al.** *Physiologia Plantarum.,* 1987, vol. 69, 633-638
- **SHIH et al.** *I. Plant. Physiol.,* 1982, vol. 70, 1592-1596
- **HAVIS et al.** *J. Agrie. Food. Chem.,* 1997, vol. 45, 2341-2344
- **EL GAOUTH et al.** *Plant. Dis.,* 1995, vol. 79, 254-278
- **GÓRNIK ; GRZESIK.** *Folia Horticulturae.,* 2005, vol. 17, 119-127
- *Official Journal of the European Union,* 19 February 2009, 48, , 5-48, 12
- **MOORE R.P.** *Int Seed Testing Ass Proc.,* 1969, vol. 34, 233
- **MOORE R.P.** *Viability of seeds.,* vol. 1973, 94-113